# EUROPÄISCHE PATENTSCHRIFT

(11) **EP 4 140 253 B1**
(45) Veröffentlichungstag und Bekanntmachung des Hinweises auf die Patenterteilung: **28.10.2026**
(21) Anmeldenummer: 21716590.1
(22) Anmeldetag: 19.03.2021
(51) Int. Cl.: H05B 1/02, H05B 3/12, H04R 23/00

(54) **VERFAHREN ZUR AKTIVIERUNG EINES GASES UND ELEKTROTHERMISCHER GASAKTUATOR SOWIE VERWENDUNG EINES GASAKTUATORS**
METHOD FOR ACTIVATING A GAS, ELECTROTHERMAL GAS ACTUATOR, AND USE OF A GAS ACTUATOR
PROCÉDÉ D'ACTIVATION D'UN GAZ, ACTIONNEUR À GAZ ÉLECTROTHERMIQUE ET UTILISATION D'UN ACTIONNEUR À GAZ

(30) Priorität: 21.04.2020 DE 102020110746
(43) Veröffentlichungstag der Anmeldung: 01.03.2023
(73) Patentinhaber: Christian-Albrechts-Universität zu Kiel, 24118 Kiel (DE)
(72) Erfinder: SCHÜTT, Fabian, 24118 Kiel (DE); REIMERS, Armin, 24113 Kiel (DE); BAHR, Jörg, 24161 Altenholz-Klausdorf (DE); SAURE, Lena Marie, 24105 Kiel (DE); RASCH, Florian, 24114 Kiel (DE); RANK, Jannik, 25436 Tornesch (DE); DEKA, Nipon, 24118 Kiel (DE); ADELUNG, Rainer, 24147 Kiel (DE); KAPS, Sören, 24232 Schönkirchen (DE)
(86) Internationale Anmeldenummer: PCT/DE2021/100278
(87) Internationale Veröffentlichungsnummer: WO 2021/213577

(56) Entgegenhaltungen:
- WO-A1-2017/091790
- WO-A1-2018/026267
- CN-A- 104 912 760
- JP-A- 2012 205 193
- US-A- 5 764 850
- US-A1- 2016 057 814
- US-A1- 2019 072 327
- WENWEN FEI ET AL: "Low-voltage Driven Graphene Foam Thermoacoustic Speaker", SMALL, vol. 11, no. 19, 1 May 2015 (2015-05-01), pages 2252 - 2256, XP055363771, ISSN: 1613-6810, DOI: 10.1002/smll.201402982
- GUIRAUD PIERRE ET AL: "Two temperature model for thermoacoustic sound generation in thick porous thermophones", JOURNAL OF APPLIED PHYSICS, vol. 126, no. 16, 28 October 2019 (2019-10-28), US, pages 165111, XP055811859, ISSN: 0021-8979, DOI: 10.1063/1.5121395

## Beschreibung

Die Erfindung betrifft ein Verfahren zur Aktivierung eines Gases nach Anspruch 1.

Ferner betrifft die Erfindung einen elektrothermischen Gasaktuator sowie Verwendungen eines Gasaktuators.

Die vorliegende Beschreibung versteht unter Gasaktivierung die Erhöhung der Bewegungsenergie der Moleküle eines Gases. In dieser weiten Definition sind Gebläse, Gaspumpen, Ventilatoren, aber auch Heizdrähte oder Herdplatten allesamt Vorrichtungen zur Gasaktivierung, im Folgenden kurz als Gasaktuatoren bezeichnet. Üblicherweise setzen Gasaktuatoren elektrische Energie in thermische und/oder mechanische Energie um und übertragen diese mindestens teilweise auf ein Gas, das den Gasaktuator umgibt (Umgebungsgas).

Zuweilen stellt sich dabei das Dosierproblem, etwa wenn man eine kleine, genau definierte Menge an Gas durch ein Auslassventil entlassen will, oder auch, wenn man sicherstellen muss, dass einem Gasvolumen eine präzise bemessene Energie zugeführt wird. Es ist nützlich, einen Gasaktuator zur Verfügung zu haben, der beliebig skalierbare Gasvolumina von Liter bis Nanoliter mit genau wählbaren Energiemengen aktivieren und dies auch beliebig oft mit hoher Repetitionsrate wiederholen kann.

Ein Verfahren und eine Vorrichtung, die diese Möglichkeiten bieten, werden im Folgenden erstmals beschrieben.

Zu den im letzten Jahrzehnt neu aufgekommenen Klassen von Materialien zählen die so genannten Aeromaterialien. Diese zeichnen sich durch eine dreidimensional vernetzte, offenporige Struktur aus nano- bis mikroskaligen - nicht notwendig immer gerade verlaufenden - Stäben oder Röhren aus. Die Stäbe oder Röhren weisen üblich ein Aspektverhältnis (Länge : Durchmesser) von fünf oder mehr auf und sind typisch nur punktuell und gegeneinander verkippt mit benachbarten Stäben oder Röhren fest verbunden. Die Verbindungen können dabei beispielsweise durch Metallverschmelzung, Kristalldurchdringung oder auch kovalent ausgebildet sein.

Manche Aeromaterialien bilden ein formelastisches Netzwerk, das nach einer temporären Verformung in seine Ausgangsform zurückkehrt.

Manche Aeromaterialien zeigen gute elektrische Leitfähigkeit.

Gemeinsame Eigenschaften aller Aeromaterialien sind:
- eine Porosität größer als 90%, üblich größer als 95%, falls hohle Röhren das Netzwerk bilden, sogar größer als 99%;
- eine sehr geringe Massendichte zwischen etwa 0,2 und 200 mg/cm³;
- ein zusammenhängendes Netzwerk, d.h. von jedem Punkt des Netzwerks führt ein Weg zu jedem anderen Punkt, ohne dass man das Material verlassen müsste;
- der große Porenraum ist offen und vollständig verbunden, insbesondere kann ein Umgebungsgas den Porenraum und das gesamte Netzwerk ohne wesentliche Behinderung durchqueren.

Der Fachmann kennt Aeromaterialien bislang vorwiegend aus wissenschaftlichen Publikationen, z.B.
Schaedler, T. A.; Jacobsen, A. J.; Torrents, A.; Sorensen, A. E.; Lian, J.; Greer, J. R.; Valdevit, L.; Carter, W. B. "Ultralight Metallic Microlattices". Science. 334 (6058): 962-5 (2011)
Gordon, L.M.; Bouwhuis, B.A.; Suralvo, M.; McCrea, J.L.; Palumbo, G.; Hibbard, G.D.. "Microtruss nanocrystalline Ni hybrids". Acta Materialia. 57: 932-939 (2009)
Wang, W. et al.; "Three dimensional few layer graphene and carbon nanotube foam architectures for high fidelity supercapacitors". Nano Energy 2, 294-303 (2013).

Die Druckschrift US 10071912 B2 beschreibt einen Aerokohlenstoff, der durch Abscheidung von Kohlenstoff aus der Gasphase auf einem Template aus vernetztem, tetrapodalem Zinkoxid (T-ZnO, vgl. EP 2550241 B1) erzeugt wird. Dabei bildet sich ein geschlossenes Netzwerk von Kohlenstoff auf den Oberflächen der ZnO-Tetrapoden, und nach der chemischen Auflösung des Templates bleibt das formelastische Netzwerk aus kovalent verbundenen, hohlen Kohlenstoffröhren zurück. Dieses als Aerographit bezeichnete Material war mit etwa 0,2 mg/cm³ zeitweise das leichteste Material der Welt.

Seit Kurzem steht eine erheblich vereinfachte Methode zur Herstellung von Aerokohlenstoff aus der Arbeit von Rasch et al., "Wet-Chemical Assembly of 2D Nanomaterials into Lightweight, Microtube-Shaped, and Macroscopic 3D Networks", ACS Applied Materials & Interfaces 2019 11 (47), 44652-44663, DOI: 10.1021/acsami.9b16565 zur Verfügung. Dabei wird eine wässrige Dispersion mit elektrochemisch abgeschälten Graphen-Blättchen auf einen vorgefertigten Zylinder aus vernetztem T-ZnO geträufelt, und es bildet sich selbstorganisiert eine geschlossene Schicht aus Graphen auf der ZnO-Oberfläche. Nach dem Entfernen des T-ZnO verbleibt ein vollständig schwarzer Zylinder aus Aerographen, dessen elektrische und mechanische Eigenschaften von Rasch et al. untersucht werden.

Weiter ist aus der FEI, WENWEN; ZHOU, JIANXIN; GUO, WANLIN: Low-voltage Driven Graphene Foam Thermoacoustic Speaker. small 2014, DOI: 10.1002/smll.201402982 ein Thermophon aus einem Graphenschaumformkörper mit 1 cm² Grundfläche bekannt, der elektrisch kontaktiert und mit einem Sinus-Wechselstrom beaufschlagt wird.

Aus der Druckschrift CN 104 912 760 A sind intelligenten Aktoren bekannt, die insbesondere einen thermopneumatischen Aktor auf der Basis von leitfähigem Schaumstoff und ein Verfahren zu dessen Herstellung betreffen, wobei der elektrothermische Aktor die Umwandlung von elektrischer Energie in mechanische Energie realisieren kann und sein Arbeitsprinzip darin besteht, zunächst elektrische Energie durch ein elektrothermisches Material in thermische Energie umzuwandeln, was dazu führt, dass sich das Betätigungsmaterial unter der Einwirkung von Wärme ausdehnt und verformt, was wiederum zu einem Betätigungsphänomen führt.

GUIRAUD, PIERRE ET AL. beschreiben in der Druckschrift "Two temperature model for thermoacoustic sound generation in thick porous thermophones", Journal of Applied Physics, 126 (16), 2019, DOI: 10.1063/1.5121395 ein Modell zur thermoakustischen Schallerzeugung, das das Verhalten von hochporösen schaum- oder schwammartigen Erzeugerschichten beschreiben kann. Es basiert auf einem Zwei-Temperatur-Schema, da das thermische Gleichgewicht zwischen dem Schaumstoff und der eingebetteten Luft normalerweise nicht erreicht wird. Zu diesem Zweck werden die Flüssigkeitsgleichungen für die Luft mit der Wärmegleichung für den festen Schaumstoff durch Randbedingungen gekoppelt, die den Energieaustausch an der Kontaktfläche zwischen ihnen nachahmen.

Zudem offenbart die Druckschrift US 2019/072327 A1 ein System zur Erwärmung eines Fluids und einen elektromagnetischer akustischer Wandler EMAT-System. Beide Systeme haben einen Antriebskreis. Die Wärmemenge und die Amplitude (und Beschleunigung) der Schwingungen sind jeweils durch Steuerung eines Eingangs an einem Anschluss eines Schalters steuerbar. Das Heizsystem besteht aus einem porösen Graphitschaumleiter, der einem elektromagnetischen Feld ausgesetzt ist, das von einem Schwingkreis erzeugt wird. Wenn er dem Feld ausgesetzt ist, leitet der Schaumstoffleiter den induzierten elektrischen Strom, der ihn und ein mit dem Leiter in Kontakt stehendes Fluid erwärmt. Das EMAT-System umfasst mindestens einen Magneten zur Erzeugung eines statischen Magnetfelds, einen Schwingkreis und ein Arbeitselement. Das Arbeitselement, das dem statischen Magnetfeld und dem vom Schwingkreis erzeugten elektromagnetischen Feld ausgesetzt ist, schwingt gegen eine Last. Die Schwingungen trocknen die Last.

Aus der Druckschrift US 5 764 850 A ist ein elektrisches Schaumheizelement, hergestellt durch das Verfahren des Formens eines Volumens von netzförmigem Siliciumcarbid-Schaummaterial in eine bevorzugte Form, des Erhitzens des Materials auf eine Temperatur von etwa 1000 °C für einen Zeitraum von 24-30 Stunden, des Ausbildens von leitenden Rändern über zwei jeweils gegenüberliegenden Randflächen, des Aufbringens eines elektrisch leitenden Filzmaterials gegen die jeweiligen leitenden Flächen und des Einklemmens des Schaumvolumens und des Schaums zwischen zwei elektrisch leitenden Elektroden bekannt. In einer anderen Ausführungsform wird zwischen den jeweiligen Elektroden und dem Siliziumkarbid-Innenraum ein Bereich aus Nickelschaumstoff vorgesehen, und zwischen dem Nickelschaum und dem Siliziumkarbid werden Filzzwischenschichten vorgesehen zwischen dem Nickelschaum und dem Siliziumkarbidschaum sowie zwischen dem Nickelschaum und den Elektroden. Das geschichtete Filzmaterial ist dreilagig aufgebaut: innere und äußere Schichten aus elektrisch leitendem Filz, die durch eine innere Metallfolienschicht getrennt sind.

Des Weiteren beschreibt die Druckschrift WO 2018/026267 A1 eine dreidimensionale thermoakustische Vorrichtung aus nanoporösem Material und das Verfahren zur Herstellung einer solchen Vorrichtung sowie spezifische Verwendungen der Vorrichtung, wobei die Vorrichtung einen verbesserten Schalldruckpegel (SPL), einen flachen Frequenzgang und eine hohe thermoakustische Effizienz aufweisen kann.

Die Druckschrift JP 2012 205193 A zeigt eine thermoakustische Vorrichtung umfassend eine poröse Wärmedämmschicht; eine Wärmeerzeugungsschicht, die auf eine Oberfläche der thermischen Isolationsschicht laminiert ist und aus linearen Kohlenstoffmaterialien besteht; und ein Paar Elektroden zum Durchleiten von Strom durch die wärmeerzeugende Schicht. Eine durchschnittliche Länge der Kohlenstoffmaterials ist größer als der durchschnittliche Durchmesser der Poren die auf der Oberfläche der Wärmedämmschicht auftreten. Die Kohlenstoffmaterialien sind vorzugsweise Kohlenstoff-Nanoröhrchen. Zumindest einige der Kohlenstoffmaterialien sind vorzugsweise so laminiert, dass sie der Oberflächenform der Wärmedämmschicht folgen.

Weiter offenbart die Druckschrift US 2016/057814 A1 ein Magneto-Energiegerät enthaltend eine elektromagnetische Feldquelle zur Erzeugung eines zeitlich veränderlichen elektromagnetischen Feldes. Ein Graphitschaumleiter ist innerhalb des elektromagnetischen Feldes angeordnet. Wenn der Graphitschaum dem zeitlich veränderlichen elektromagnetischen Feld ausgesetzt ist, leitet er einen induzierten elektrischen Strom, der den Graphitschaum erwärmt. Eine Energieumwandlungsvorrichtung nutzt die Wärmeenergie aus dem erhitzten Graphitschaum, um um eine Wärmeenergie verbrauchende Funktion auszuführen. Eine Vorrichtung zur Erwärmung eines Fluids und ein Verfahren zur Energieumwandlung werden ebenfalls offengelegt.

Zudem ist wird in der Druckschrift WO 2017/091790 A1 ein System und ein Verfahren zur Erwärmung einer Substanz (d. h. einer Flüssigkeit, eines Gases und/oder eines absorbierten Feststoffs) unter Verwendung eines nanostrukturierten porösen Kohlenstoffschaums als Wärmeübertragungsmaterial und einer elektronischen Wärmequelle beschrieben. In einigen Ausführungsformen kann die Wärmequelle ein volumetrisches Mikrowellenheizsystem (MVH) sein. Das Verfahren zum Erhitzen, Verdampfen oder Zersetzen der gewünschten Substanz kann beinhalten, dass die Substanz durch das Wärmeübertragungsmaterial aus nanostrukturiertem porösem Schaumstoff gefiltert oder kontinuierlich hindurchgeleitet wird, was zu einem physikalischen Einschluss oder einer Absorption der Substanz führt, und dass das poröse Schaumstoff-Wärmeübertragungsmaterial mit Kohlenstoff-Nanostruktur einer ausreichenden elektronischen Strahlung ausgesetzt wird.

Die Erfindung stellt sich die Aufgabe, ein Verfahren und eine Vorrichtung zur Gasaktivierung definierter Volumina mit definierten Energiemengen mittels Aeromaterialien aufzuzeigen.

Die Aufgabe wird gelöst durch ein Verfahren gemäß Hauptanspruch sowie nebengeordneten Ansprüchen. Weitere vorteilhafte Ausgestaltungen sind den Unteransprüchen zu entnehmen.

Das erfindungsgemäße Verfahren zur Aktivierung eines Gases ist dadurch ausgebildet, dass
- ein elektrisch leitfähiges Aeromaterial in Form eines Aerokohlenstoffs mit einem das Gas aufweisenden Porenraum elektrisch kontaktiert wird und
- wenigstens ein zeitabhängig veränderlicher elektrischer Strom durch das Aeromaterial fließt, wobei
   - das Aeromaterial bei einer Erhöhung der elektrischen Leistungsaufnahme Gas aus dem Porenraum exhaliert und
   - bei einer Verringerung der Leistungsaufnahme Gas aus der Umgebung des Aeromaterials inhaliert
   wobei
- ein zeitlich gepulster Strom mit vorbestimmten Pulsleistungen, Pulsdauern und Pulsabständen durch das Aeromaterial geführt wird, wobei
   - die vorbestimmten Pulsleistungen im Bereich von einigen Watt bis über 100 Watt liegen, wodurchdie Temperatur des Aeromaterials um 100 °C
      oder mehr binnen einer Sekunde oder weniger geändert wird und
   - die Pulsabstände wenigstens eine Größenordnung größer als die Pulsdauern eingerichtet werden.

Elektrisch leitfähige Aeromaterialien können aus elektrisch leitfähigen Elementen wie Kohlenstoff oder aus einem Metall gebildet werden. Bei Vorliegen eines zusammenhängenden Netzwerkes - bei Existenz perkolierender Strompfade - erweist sich die elektrische Kontaktierung des Aeromaterials in der Regel als unerwartet einfach. Es reicht oft aus, zwei beliebige, separate Punkte des Aeromaterials zu kontaktieren, und der aktivierte Stromfluss zwischen diesen beiden Punkten nimmt praktisch jeden möglichen Pfad durch das Material. Dies führt zu einer gleichförmigen ohmschen Erwärmung des gesamten Aeromaterial-Netzwerkes. Der Grund dafür liegt in dem mit der Erwärmung typisch verbundenen Widerstandsanstieg, so dass der Strom in der extremen "Parallelschaltung" des leitfähigen Netzwerkes immer bevorzugt den kühlsten Pfad nimmt. Da sich alle Pfade sehr schnell erwärmen, erfolgt die Erwärmung annähernd überall gleichzeitig.

Schon bei Bestromung mit geringen elektrischen Leistungen von wenigen Watt kann die Erwärmung des Aeromaterials mehrere 100 °C betragen. Die Endtemperatur kann in weniger als einer Sekunde annähernd erreicht werden.

Aeromaterialien übertragen Wärmeenergie exzellent an Gase, aber nicht an Flüssigkeiten oder Festkörper. Der Grund dafür liegt in der sehr geringen spezifischen Wärmekapazität der Aeromaterialien, die sich - ähnlich wie die Massendichte - in dem für Gase üblichen Bereich von Größenordnungen befindet. Temperaturerhöhungen in Aeromaterialien lassen sich deshalb nur kontaktlos bestimmen über eine Messung der Wärmestrahlung. Es ist erfindungsgemäß vorgesehen, einer lokal begrenzten Menge Gas eine möglichst genau bekannte Energiemenge zuzuführen.

Insbesondere erfolgt in besonders bevorzugter Weise ein geleitetes Aktivieren des Gases durch Anordnen des Aeromaterials in Form eines Formkörpers in einem Gehäuse mit Gaseinlass und Gasauslass und Rückschlagventilen. Bei der Ausbreitung von Schallwellen gibt das aktivierte Gas die Energie durch Stoßprozesse an benachbarte Gasvolumina weiter. Wenn die Energieweitergabe durch ein das Aeromaterial umgebendes Gehäuse unterbunden ist, dann wird das dem Aeromaterial durch einen Gaseinlass in das Gehäuse zugeführte Gas direkt aktiviert und beispielsweise durch einen Gasauslass gerichtet aus dem Gehäuse ausgetrieben, was insbesondere die Basis für ein Pumpwerk, ganz besonders in Form einer Mikrodosierpumpe darstellt. Eine nennenswerte Menge des aktivierten Gases wird beim Pumpen einer erheblichen lokalen Verschiebung unterworfen, die dann wiederum in eine vorbestimmte Richtung erfolgen soll. Das vorgesehene Zwangsmittel für das aktivierte Gas ist das umgebende Gehäuse, welches zusätzlich Rückschlagventile als mechanische Verschlüsse bevorzugt aufweist. Die Bestromung des Aeromaterials muss bzw. zumindest sollte dabei ersichtlich an die mechanische Schaltgeschwindigkeit der Ventile angepasst sein.

Damit das Pumpwerk auch bei gepulster Bestromung mit kleiner Repetitionsrate nennenswerte Gasströme aktivieren kann, sollte bzw. muss schon jeder einzelne Strompuls ein wohldefiniertes Gasvolumen aktivieren und zur Bewegung veranlassen, was hier durch die hohen Pulsstromleistungen im Bereich von einigen Watt bis über 100 Watt erzielt wird. Diese führen zu Temperaturänderungen im Aeromaterial um mehr als 100 °C und damit zur Aktivierung des gesamten im Porenraum vorhandenen Gases. Daher geht die Offenbarung einen deutlich anderen Weg als der Stand der Technik, in dem üblicherweise nur Leistungen von 0,1 W gefahren werden (vgl. zB . Fei et al. - Es werden keine Angaben zu Temperaturänderungen des Aeromaterials gemacht, aber es darf unterstellt werden, dass diese in der D1 aufgrund der geringeren Leistung und der Kilohertz-Oszillation weniger als 100 °C betragen dürften).

Die erfindungswesentliche Erkenntnis, die hier erstmals berichtet wird, kann daher lauten:
a. Das Gas im Porenraum übernimmt die durch Bestromung ansteigende Temperatur des Materials praktisch unverzüglich und expandiert in etwa gemäß dem Gesetz von Gay Lussac (V/T = konstant). Ein Anteil des Gases verlässt das Aeromaterial, und zwar bei einem schnellen Anstieg der Bestromung in der Regel sogar mit einem kleinen, hörbaren Knall. Das Aeromaterial exhaliert, wenn die elektrische Leistung ansteigt.
b. Wird die Bestromung deaktiviert oder die elektrische Leistung verringert, so strömt sofort kühleres Umgebungsgas in den Porenraum nach, und das Aeromaterial gibt Wärme an dieses Gas ab. Das Aeromaterial inhaliert in diesem Fall Umgebungsgas.
c. Ein auf hohe Temperaturen, z.B. 1000 °C und mehr, erhitztes Aeromaterial kühlt in sehr kurzer Zeit nach dem Abschalten der Bestromung wieder auf seine Ausgangstemperatur vor dem Beginn der Bestromung ab. Die Abkühlzeit kann dabei unter einer Sekunde liegen.

Die elektrisch steuerbare Exhalation/Inhalation des leitfähigen Aeromaterials, die man mit einigem Recht als "elektrothermische Atmung" bezeichnen kann, wird durch das Merkmal c auch technisch nutzbar, denn dies gestattet technisch relevante Repetitionsraten.

Es wird als besonders vorteilhaft betrachtet, dass ein zeitlich gepulster Strom mit vorbestimmten Pulshöhen, Pulsdauern und Pulsabständen durch das Aeromaterial geführt wird. Bei jedem der Strompulse wird eine definierte Energie - nämlich die vorbestimmte elektrische Leistung multipliziert mit der vorbestimmten Strompulsdauer - an eine definierte Gasmenge - nämlich das Volumen des Porenraums des bestromten Aeromaterials - transferiert. Entsprechend definiert ist bei jedem Strompuls die Gasexpansion und die Verdrängung aus dem Porenraum.

Die Gasaktivierung erfolgt praktisch nur im Porenraum und damit genau an jenem Ort in einem gasgefüllten Volumen, an dem das Aeromaterial angeordnet ist.

Der elektrothermische Gasaktuator zur Gasaktivierung definierter Volumina mit definierten Energiemengen mittels Aeromaterialien umfasst erfindungsgemäß:
- eine elektrische Stromquelle,
- eine Kontrolleinrichtung ausgebildet zur Ansteuerung der Stromquelle nach einem erfindungsgemäßen hier offenbarten und beanspruchten Verfahren,
- einen Formkörper aus einem elektrisch leitenden Aeromaterial, wobei der Formkörper offenporige Seiten mit Zugängen für ein Gas und/oder Umgebungsgas zum Porenraum des Aeromaterials aufweist und zur elektrischen Bestromung kontaktiert ist, wobei das elektrisch leitende Aeromaterial ein Aerokohlenstoff ist, und wobei
das Volumen des Porenraumes des Formkörpers einen Wert aus dem Intervall von 1 Nanoliter bis 1 Liter aufweist.

Unter einem Formkörper ist zunächst ein geometrischer Körper - z.B. Würfel, Zylinder, Kugel - zu verstehen. Im Kontext dieser Beschreibung ist der Formkörper eines offenporigen Netzwerks ein reales physikalisches Objekt, nämlich ein in eine spezifische geometrische Form gebrachtes Aeromaterial. Die Seiten des Formkörpers fallen dabei mit den Randausläufern des Netzwerks zusammen, d.h. sie bilden die Einhüllende des Netzwerks. Die wahre innere Oberfläche des Aeromaterials übersteigt die Gesamtoberfläche der Seiten des geometrischen Formkörpers um Größenordnungen.

Die Form des Formkörpers kann beispielsweise und bevorzugt für Aerokohlenstoff mittels eines Formkörpers aus T-ZnO vorbestimmt werden. Sie kann auch mittels präzisen Laserschneidens des Aerokohlenstoffs erreicht werden, weil Aerokohlenstoff Licht sehr gut absorbiert.

Es lassen sich beispielsweise mit T-ZnO Templates und ggf. anschließender Laserbearbeitung Formkörper aus Aerographen mit einem Volumen zwischen vorzugsweise 1 Nanoliter und 1 Liter herstellen. Bei einer typischen Porosität von Aerographen von mehr als 99 % entspricht das Volumen des Formkörpers annähernd dem Volumen seines Porenraums und damit dem Volumen des durch einen einzelnen Strompuls aktivierten Gases.

Die einzigartige Fähigkeit der Aeromaterialien, elektrothermische Gasaktivierung in wohldefinierter Dosierung mit bei Bedarf hoher Wiederholrate auszuführen, lässt mehrere neue Anwendungen erkennen, die weiter unten beschrieben sind.

Die Erfindung wird zunächst anhand eines Ausführungsbeispiels eines Gasaktuators mit einem Formkörper aus Aerographen sowie anhand von Abbildungen noch näher erläutert. Dabei zeigt:
Abb. 1 pyrometrisch gemessene Temperaturverläufe und Endtemperaturen des Formkörpers aus Aerographen für verschiedene elektrische Leistungen der Bestromung des Formkörpers;
Abb. 2 einen der Plots wie in Abb. 1 erfasst parallel mit einem Pyrometer und einer IR Kamera;
Abb. 3 den Temperaturverlauf des Formkörpers bei einem Strompuls der Leistung 15 W für eine Pulsdauer von 60 ms erfasst mit Pyrometer und IR Kamera;
Abb. 4 den pyrometrisch gemessenen Temperaturverlauf des Formkörpers bei einer Sequenz von Strompulsen der Leistung 109 W mit Pulsdauern von 1,7 ms;
Abb. 5 den Temperaturverlauf des Formkörpers beim einem ersten Strompuls der Leistung 7 W für eine Pulsdauer von 10 ms im Vergleich zu den Temperaturverläufen nach weiteren 50000 oder 100000 applizierten Strompulsen mit denselben Pulsparametern;
Abb. 6 die pyrometrisch gemessenen Temperaturverläufe für ein mit Graphen beschichtetes Template aus T-ZnO im Vergleich zum Temperaturverlauf des verbleibenden Aerographens nach dem Entfernen des T-ZnO;
Abb. 7 den pyrometrisch gemessenen Temperaturverlauf des Formkörpers aus Aerographen bei einer temperaturgetakteten Pulsbestromung mit einer Frequenz von ca. 10 Hz.

Ein experimenteller Aufbau aufweisend einen zur Bestromung kontaktierten Formkörper aus Aerographen geht bereits aus der Arbeit von Rasch et al. hervor. Er ist zweckdienlich zur Realisierung des hier vorgeschlagenen Gasaktuators. Allerdings machen Rasch et al. keinerlei Aussagen zum Umgebungsgas, zu den Temperaturen des Formkörpers oder zu einer gepulsten Bestromung. Es findet lediglich eine Leitwertbestimmung statt, aus der sich folgern lässt, dass Aerographen nach dem dort beschriebenen Herstellverfahren oberhalb einer Dichte von 1 mg/cm³ perkolierende Strompfade aufweist.

Im Folgenden ist zur Abkürzung mit Formkörper immer exemplarisch ein Formkörper aus Aerographen gemeint. Es ist davon auszugehen, dass alle elektrisch leitenden Aeromaterialien ein qualitativ ähnliches Verhalten zeigen, wobei selbstverständlich Unterschiede zwischen Kohlenstoff-Netzwerken und metallischen Mikrogittern bestehen, die im Einzelfall angemessen zu berücksichtigen sind. Beispielsweise lässt sich Aerokohlenstoff in einem chemisch inerten Umgebungsgas schadlos bis auf mehr als 3000 °C erhitzen, was für die Mikrogitter eher zu vermeiden ist. Für die Zwecke des hier vorgestellten Gasaktuators werden diese Unterschiede aber als unerheblich angesehen, weil keine extremen Bedingungen erforderlich sind.

Der bestromte Formkörper kann mit einem Pyrometer und/oder einer Wärmebildkamera beobachtet werden, um seine Temperatur aus der Wärmestrahlung zu ermitteln.

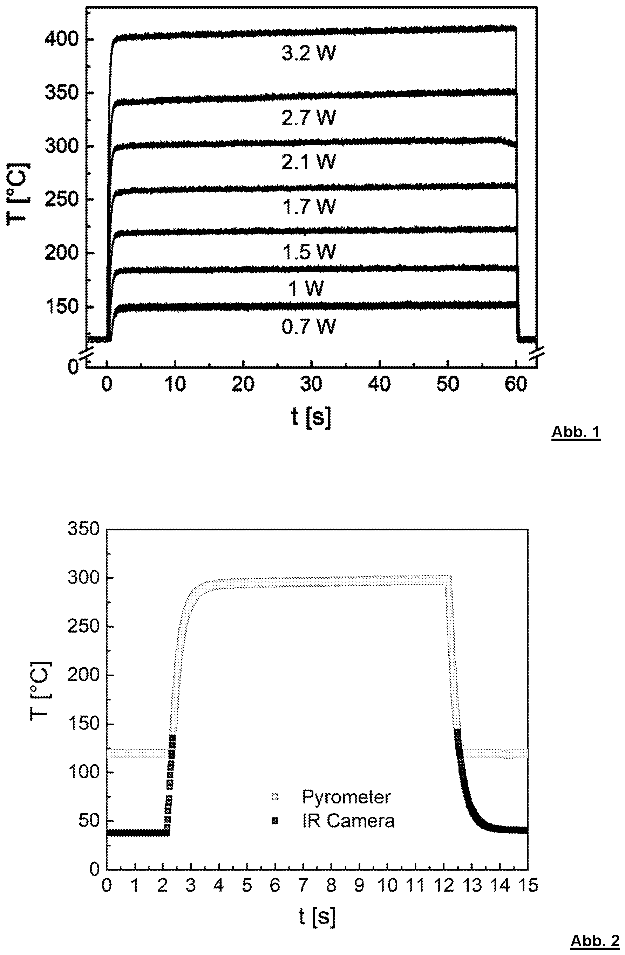

In Abb. 1 ist ein Satz von pyrometrisch erfassten Temperaturmessdaten zu sehen, bei dem ein Formkörper auf verschiedene Temperaturniveaus erwärmt wird. Maßgeblich für das Ausmaß der Erwärmung ist die applizierte elektrische Leistung, wie der Figur zu entnehmen ist. Der Formkörper erreicht seine Endtemperatur, wenn sich seine Energieaufnahme aus dem ohmschen Widerstand bei Bestromung mit seinen Energieverlusten durch Abstrahlung und Gaskonvektion im Porenraum equilibriert. Abb. 1 zeigt deutlich, dass die Endtemperatur schon nach weniger als einer Sekunde annähernd erreicht ist. Fast genauso schnell erfolgt die Abkühlung bei Wegnahme der Leistung, selbst aus dem equilibrierten - also nicht nur kurzzeitig erwärmten - Zustand heraus. Temperaturerhöhungen um mehr als 100 °C lassen sich mit wenigen Watt Leistungen erreichen.

Das Grundniveau der Temperatur liegt in Abb. 1 bei ca. 120 °C, was aber ein Artefakt der Messung ist. Temperaturen darunter können mit dem Pyrometer nicht mehr detektiert werden. In Abb. 2 ist deshalb ein Temperaturverlauf wie in Abb. 1 simultan mit dem Pyrometer und mit einer IR Kamera erfasst worden, wobei die Kamera über einen größeren Messbereich verfügt. Man entnimmt Abb. 2, dass die Rückkehr des Formkörpers zur Umgebungstemperatur tatsächlich auch sehr schnell binnen etwa 1-2 Sekunden stattfindet. Dieses erstaunlich effiziente Abkühlverhalten von Aeromaterialien nach ohmscher Erwärmung wurde nach Kenntnis der Erfinder bislang noch nie berichtet und soll hier ausgenutzt werden.

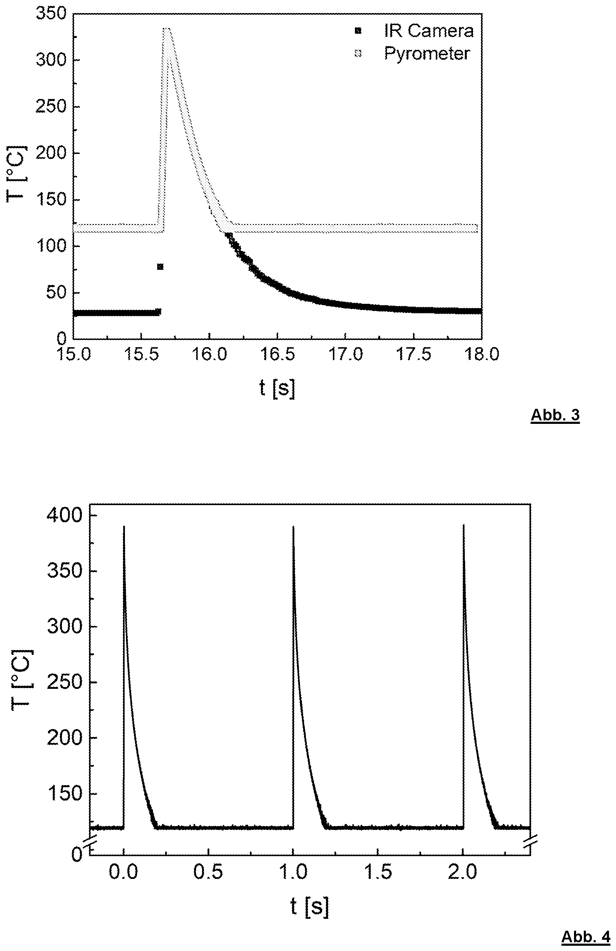

Es ist erfindungsgemäß vorgesehen, zeitlich veränderliche Ströme, vorzugsweise Strompulse mit vorbestimmten Pulsleistungen, Pulsdauern und Pulsabständen, durch Aeromaterialen, insbesondere Formkörper aus Aeromaterialien, fließen zu lassen. Beispielsweise zeigt Abb. 3 den Temperaturverlauf des besagten Formkörpers aus Aerographen für einen Strompuls der Pulsleistung 15 W bei einer Pulsdauer von 60 ms. Zur Verdeutlichung: die Pulsleistung ist wie üblich das Produkt aus am Formkörper angelegter Spannung und im Formkörper generiertem Strom, und die Pulsenergie ist das Produkt aus Pulsleistung und Pulsdauer. Die Pulsenergie kann durch Variation von Pulsleistung und/oder Pulsdauer verändert werden. Der Pulsabstand ist die Zeitspanne zwischen dem Einsetzen eines ersten Strompulses und dem Einsetzen eines zeitlich dem Ende des ersten Strompulses direkt nachfolgenden zweiten Strompulses, unabhängig von der Pulsdauer. In einer Sequenz von mehr als zwei Strompulsen können sich die Pulsabstände im Laufe der Sequenz ändern.

Aus dem Vergleich von Abb. 3 mit Abb. 1 ist klar, dass die kurze Pulsdauer bewirkt, dass die Erwärmung des Formkörpers lange vor Erreichen einer Endtemperatur (über 1000 °C für 15 W), also noch in der ansteigenden Flanke, abgebrochen wird. Ebenso wird deutlich, dass die IR Kamera eine zu langsame Messdynamik zum Erfassen der ansteigenden Temperaturflanke bei höheren Pulsleistungen aufweist. Nachfolgend werden daher nur noch Messdaten des sehr viel schnelleren Pyrometers gezeigt unter Hinweis auf das besagte Messartefakt bei 120 °C.

Um eine sehr steile Aufheizflanke zu erreichen wird bei den Messdaten der Abb. 4 jeder Strompuls einer Sequenz von Pulsen mit einer Leistung von 109 W für die Pulsdauer 1,7 ms appliziert. Die Abkühlflanke benötigt jeweils ungefähr 200 ms (bis zum Verlassen des Pyrometer-Messbereichs). Mit einem exemplarisch gewählten Strompulsabstand von 1 s lässt sich eine Sequenz gleichartiger Temperaturverläufe produzieren.

Es wird als generell vorteilhaft angesehen, eine gepulste Bestromung des Aeromaterials so durchzuführen, dass dabei die Pulsabstände wenigstens eine Größenordnung größer als die Pulsdauern eingerichtet werden. Auf diese Weise kann eine repetierende Arbeitsweise des Gasaktuators sichergestellt werden, d.h. jeder "Atemzug" des Gasaktuators hat einen klar vorhersagbaren Effekt auf das Gas. Der Gasaktuator kehrt nach jedem Puls in seinen Ausgangszustand zurück, bevor der nächste Puls appliziert wird.

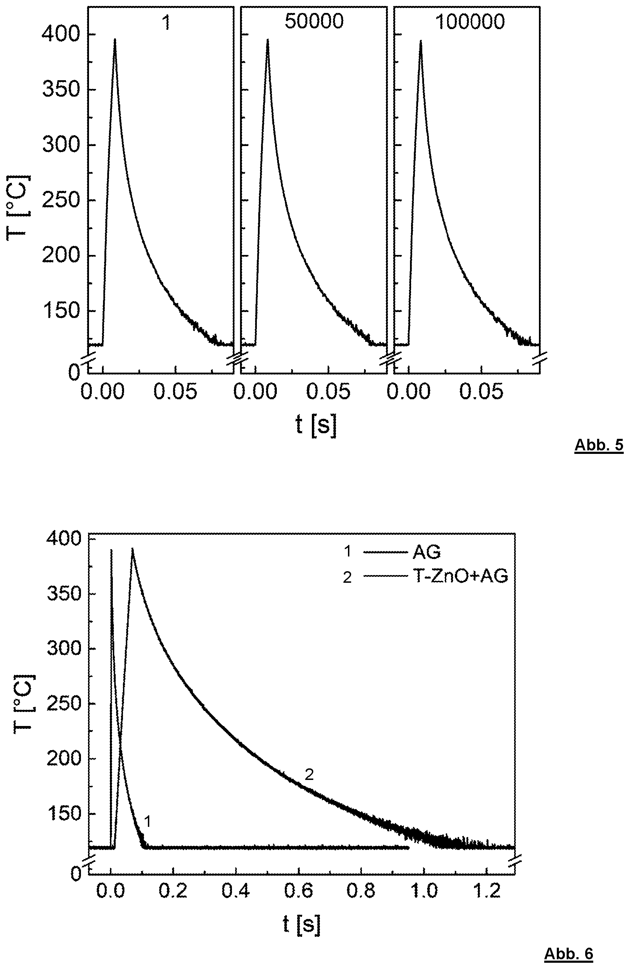

Der Abb. 5 entnimmt man den Temperaturverlauf des Formkörpers beim einem ersten Strompuls der Leistung 7 W für eine Pulsdauer von 10 ms im Vergleich zu den Temperaturverläufen nach weiteren 50000 oder 100000 applizierten Strompulsen mit denselben Pulsparametern. Die Pulsparameter wurden hier gezielt ausgewählt, um den Formkörper jedes Mal auf 400 °C zu erhitzen. Das thermische Zyklieren macht dem Formkörper erkennbar nichts aus, d.h. auch lange Sequenzen von Strompulsen sind möglich und unschädlich.

Anhand der Abb. 6 ist zu sehen, wie bedeutsam die geringe Massendichte und Wärmespeicherkapazität des Aeromaterials für sein schnelles Abkühlverhalten sind. Die mit T-ZnO+AG bezeichnete Kurve repräsentiert den Temperaturverlauf eines T-ZnO Templates, das nach Rasch et al. mit abgeschälten Graphen-Blättchen beschichtet worden ist. Bei Bestromung des Templates fließt der Strom fast nur durch die Graphen-Schichten, aber die erzeugte Wärmemenge wird auch an das T-ZnO abgegeben und dort besser gespeichert. Wird der Strom abgeschaltet, benötigt die Abkühlung unter die Messgrenze des Pyrometers mehr als eine Sekunde, obwohl das kristalline T-ZnO kein guter Wärmespeicher ist und selbst nur eine Dichte von etwas mehr als 300 mg/cm³ aufweist. Die mit AG bezeichnete Kurve zeigt für identische Strompulsparameter den Temperaturverlauf derselben Graphen-Schichten nach dem chemischen Auflösen des T-ZnO, also nunmehr als Aerographen mit einer Dichte von 4 mg/cm³. Die Abkühlgeschwindigkeit hat sich um eine ganze Größenordnung erhöht.

Es ist anzumerken, dass die Messdaten der Abbildungen 1 bis 5 mit Aerographen einer Massendichte von 8 bis 10 mg/cm³ ermittelt worden sind, was man an der etwas geringeren Abkühlgeschwindigkeit gegenüber dem Aerographen aus Abb. 6 erkennt. Als Faustregel gilt, dass eine geringere Massendichte mit einer schnelleren Abkühlung einhergeht. Als physikalische Untergrenze der Massendichte wird 0,2 mg/cm³ angesehen, weil sich darunter kein zusammenhängendes Netzwerk zur gleichmäßigen Bestromung mehr realisieren lässt. Technisch sind zudem auch aus Gründen der mechanischen Eigenschaften Massendichten oberhalb von 1 mg/cm³ zu bevorzugen.

Die bislang gezeigten Temperaturverläufe eines Formkörpers aus einem Aeromaterial, bevorzugt aus einem Aerokohlenstoff, besonders bevorzugt aus Aerographen, sind alle mit Gasaktivierung im Porenraum des Aeromaterials verbunden. Wie bereits erwähnt, kann der Formkörper im Takt seiner zeitlich veränderlichen Bestromung exhalieren und inhalieren, er verhält sich gewissermaßen wie ein elektrischer Blasebalg, aber ohne bewegte Teile.

Somit reicht es aus, beispielsweise dem Aufbau von Rasch et al. eine Kontrolleinrichtung zur Ansteuerung der Stromquelle beizufügen, um zu einem erfindungsgemäßen Gasaktuator zu gelangen. Die Kontrolleinrichtung kann dabei aus einem herkömmlichen Mikroprozessor oder PC gebildet sein, welcher programmierte Steuerbefehle an die Stromquelle zur Aktivierung, Deaktivierung oder Leistungsregelung erteilt. Die Kontrolleinrichtung kann dazu ausgebildet sein, vom Nutzer auswählbare Strompulsparameter durch die Stromquelle realisieren zu lassen. Die Kontrolleinrichtung kann Steuerbefehle aus gespeicherten Tabellen ablesen und zu vorbestimmten Zeiten ausführen. Zusätzlich oder alternativ kann die Kontrolleinrichtung auch weitere Messdaten empfangen, verarbeiten und zur Erteilung von Steuerbefehlen heranziehen.

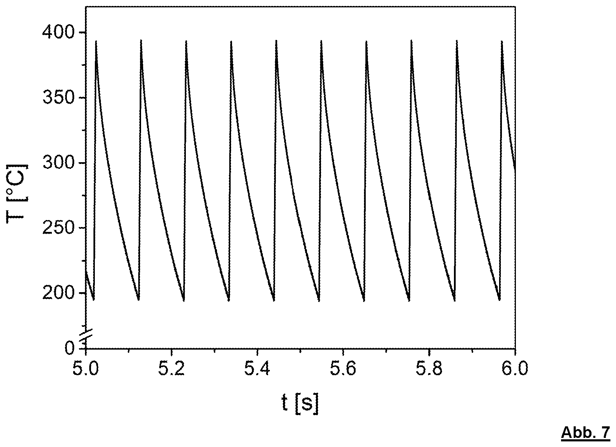

Ein Beispiel für ein rückgekoppeltes Arbeiten des Gasaktuators kann darin bestehen, dass man dem Gasaktuator eine minimale Pump- oder Atemfrequenz vorgibt mit der Maßgabe, dass er gleichmäßige Ex- und Inhalation sicherstellen soll. Zu diesem Zweck wird die Temperatur des Formkörpers des Gasaktuators mit einem Pyrometer überwacht, und die Pyrometer-Messdaten werden der Kontrolleinrichtung zugeführt. Die Kontrolleinrichtung kann dann beispielsweise anhand des Temperaturverlaufs Zeitpunkte festlegen, zu denen sie weitere Strompulse auslöst, um gleichmäßige Temperaturzyklen in der vorgegebenen Mindestfrequenz zu erzeugen. Ein solches Vorgehen generiert exemplarisch einen Temperaturverlauf wie zu sehen in Abb. 7, wo eine Mindestfrequenz von 10 Hz realisiert wird.

Die Kontrolleinrichtung kann auch die Leistung und/oder die Dauer von wiederholten Strompulsen variieren und dabei so einrichten, dass eine fest vorgeschriebene Atemfrequenz genau erreicht und die Gleichmäßigkeit der Erwärmung des Formkörpers bei allen Pulsen eingehalten wird.

Zwar ist das Abkühlen des Formkörpers - verbunden mit seiner Inhalation - der langsamere Prozess bei der Gasaktivierung, aber dessen Geschwindigkeit kann gleichwohl auch beeinflusst werden. Insbesondere kann es von Vorteil sein, wenn dem zeitlich veränderlichen Strom durch den Formkörper ein von null verschiedener, zeitlich konstanter Strom überlagert wird. Dies hat zur Folge, dass sich der Formkörper grundsätzlich gegenüber dem Umgebungsgas auf einer erhöhten Temperatur befindet, so dass seine Abkühlung durch Inhalation von Umgebungsgas schneller erfolgt. Man setzt sich dadurch auf einen anderen Arbeitspunkt der Abkühlkurve. Als Faustregel kann man hier angeben: ja größer die Temperaturelevation des Formkörpers gegenüber der Umgebungstemperatur ist, desto höhere Atemfrequenzen kann der Gasaktuator realisieren.

Bevorzugt ist es vorgesehen, dass die zeitliche Veränderung des Stroms durch den Formkörper mit einer Frequenz von 10 Hz oder mehr durchgeführt wird. Besonders bevorzugt werden aber auch Frequenzen im Bereich größer als 100 Hz oder sogar größer als 1 kHz realisiert. Dabei ist es nicht immer erforderlich, dass die Temperaturschwankungen des Formkörpers so ausgeprägt sein müssen wie in den bisherigen Beispielen gezeigt. Auch weniger als 100°C Temperaturschwankung erzeugen eine Gasaktivierung, und bei den besagten Frequenzen emittiert der Gasaktuator dann hörbare Schallwellen. Eine sehr interessante mögliche Anwendung des erfindungsgemäßen Gasaktuators wird daher in der Verwendung als Schallemitter oder Lautsprecher - auch zur Wiedergabe von Sprache oder Musik - gesehen. Die Abstrahlcharakteristik kann dabei im Prinzip omnidirektional, jedenfalls aber weniger eingeschränkt als bei herkömmlichen Lautsprechern sein. Überdies ist der Gasaktuator grundsätzlich sehr klein und platzsparend.

Eine weitere im Labor erprobte Anwendung besteht darin, den bereits als Blasebalg verstandenen Gasaktuator unmittelbar als Pumpwerk einer Mikrodosierpumpe für Gase einzusetzen. Hierfür kann man den Gasaktuator in einem geschlossenen Gehäuse aufweisend einen Gaseinlass und einen Gasauslass, beide versehen mit Rückschlagventilen, anordnen. Während der elektrothermischen Exhalation generiert der Gasaktuator einen Überdruck im Gehäuse, und allein der Gasauslass öffnet sich und lässt einen Gasanteil entweichen. Bei der Inhalation wird im Gehäuse ein Unterdruck erzeugt, der durch das alleinige Öffnen des Gaseinlasses ausgeglichen wird. Eine Sequenz von Strompulsen befördert somit eine genau bestimmbare Gasmenge durch das Gehäuse und in einen ausgangsseitig angeordneten Schlauch oder dergleichen. Durch die Wahl der Strompulsabstände, also der Repetitionsrate, kann die Pumpgeschwindigkeit eingerichtet werden.

Eine unter dem Eindruck der Corona-Pandemie 2020 wohl sehr wichtige und zukunftsweisende Anwendung des erfindungsgemäßen Gasaktuators liegt in der Luftreinigung, ganz besonders zum Zerstören von in der Umgebungsluft mitbewegten organischen Strukturen und Kleinstorganismen, wie etwa Viren und Pilzsporen. Tatsächlich darf man ihm hier sogar besonders hohe Wirksamkeit ohne nennenswerte Umweltbelastung unterstellen, was für den Einsatz in Krankenhäusern besonders wichtig ist.

Genau wie die Gasmoleküle werden mitbewegte organische Flugpartikel während der repetierenden gepulsten Bestromung in den Porenraum des Formkörpers des Gasaktuators inhaliert und dort schlagartig Temperaturen ausgesetzt, die jegliche biologische Organik zuverlässig denaturieren. Bei dieser Anwendung wird es als besonders vorteilhaft angesehen, wenn die Temperatur des Aeromaterials durch den zeitlich veränderlichen Strom um 100 °C oder mehr, bevorzugt 300 °C oder mehr, binnen einer Sekunde oder weniger geändert wird. Die so zerstörten oder getöteten Überreste werden weitestgehend exhaliert, und falls doch Überreste im Porenraum zurückbleiben sollten, so können diese durch einen gelegentlichen "Service-Strompuls", der den Formkörper für kurze Zeit auf eine sehr hohe Temperatur bringt, thermisch zersetzt und ausgegast werden. Zugleich kann vermieden werden, dass die Raumluft insgesamt eine merkliche Erwärmung erfährt, da ihr der Gasaktuator üblich nur wenige Joule pro Sekunde an Energie zuführt.

Experimentell zeigt sich bei Bestromungstests, dass man Aufheizraten von 100.000 °C pro Sekunde und mehr leicht erreichen kann. Heizt man aber ein zu großes Volumen eine Formkörpers zu schnell auf, so kann das erhitzte Gas im Porenraum nur noch dadurch schnell genug entweichen, dass es Teile des Formkörpers absprengt. Es empfiehlt sich daher eine Begrenzung der elektrischen Leistung in Abhängigkeit vom Volumen des bestromten Aeromaterials einzurichten.

## Patentansprüche

1. Verfahren zur Aktivierung eines Gases, wobei
- ein elektrisch leitfähiges Aeromaterial in Form eines Aerokohlenstoffs mit einem das Gas aufweisenden Porenraum elektrisch kontaktiert wird und
- wenigstens ein zeitabhängig veränderlicher elektrischer Strom durch das Aeromaterial fließt, wobei
- das Aeromaterial bei einer Erhöhung der elektrischen Leistungsaufnahme Gas aus dem Porenraum exhaliert und
- bei einer Verringerung der Leistungsaufnahme Gas aus der Umgebung des Aeromaterials inhaliert
**dadurch gekennzeichnet, dass**
- ein zeitlich gepulster Strom mit vorbestimmten Pulsleistungen, Pulsdauern und Pulsabständen durch das Aeromaterial geführt wird, wobei
- die vorbestimmten Pulsleistungen im Bereich von einigen Watt bis über 100 Watt liegen, wodurch die Temperatur des Aeromaterials um 100 °C oder mehr binnen einer Sekunde oder weniger geändert wird,
und
- die Pulsabstände wenigstens eine Größenordnung größer als die Pulsdauern eingerichtet werden.

2. Verfahren nach Anspruch 1,
**dadurch gekennzeichnet, dass**
ein geleitetes Aktivieren des Gases durch Anordnen des Aeromaterials in Form eines Formkörpers in einem Gehäuse mit Gaseinlass und Gasauslass und Rückschlagventilen erfolgt.

3. Verfahren nach einem der vorangehenden Ansprüche,
**dadurch gekennzeichnet, dass**
dem zeitlich veränderlichen Strom ein von null verschiedener zeitlich konstanter Strom überlagert wird.

4. Verfahren nach einem der vorangehenden Ansprüche,
**dadurch gekennzeichnet, dass**
die zeitliche Veränderung des Stroms mit einer Frequenz von 10 Hz oder mehr durchgeführt wird.

5. Elektrothermischer Gasaktuator zur Gasaktivierung definierter Volumina mit definierten Energiemengen mittels Aeromaterialien umfassend:
- eine elektrische Stromquelle,
- eine Kontrolleinrichtung ausgebildet zur Ansteuerung der Stromquelle nach einem Verfahren der vorangehenden Ansprüche,
- einen Formkörper aus einem elektrisch leitenden Aeromaterial, wobei der Formkörper offenporige Seiten mit Zugängen für ein Gas und/oder Umgebungsgas zum Porenraum des Aeromaterials aufweist und zur elektrischen Bestromung kontaktiert ist, wobei das elektrisch leitende Aeromaterial ein Aerokohlenstoff ist, und wobei das Volumen des Porenraumes des Formkörpers einen Wert aus dem Intervall von 1 Nanoliter bis 1 Liter aufweist.

6. Verwendung eines Gasaktuators nach Anspruch 5 als Pumpwerk einer Mikrodosierpumpe für Gase.

7. Verwendung eines Gasaktuators nach Anspruch 5 zum Zerstören von in der Umgebungsluft mitbewegten organischen Strukturen und Kleinstorganismen.

8. Verwendung eines Gasaktuators nach Anspruch 5 als Emitter für hörbaren Schall oder als Lautsprecher.

## Claims

1. Method for activating a gas, wherein
- an electrically conductive aeromaterial in the form of an aerocarbon having a pore space comprising the gas is electrically contacted, and
- at least one electric current, which varies over time, flows through the aeromaterial,
wherein
- the aeromaterial exhales gas from the pore space when the electric power consumption is increased and
- it inhales gas from the surroundings of the aeromaterial when the power consumption is decreased,
wherein
- a time-varying pulsed current having predetermined pulse power levels, pulse durations and pulse intervals is fed through the aeromaterial, wherein
- the specified pulse power levels range from a few watts to over 100 watts, thereby the temperature of the aeromaterial is changed by 100°C or more within one second or less,
and
- the pulse intervals are set to be at least one magnitude larger than the pulse durations.

2. The method according to claim 1,
wherein
a guided activation of the gas is performed by arranging the aeromaterial in the form of a shaped body in a housing with a gas inlet and a gas outlet and check valves.

3. The method according to any of the preceding claims,
wherein
a current, constant in time and different from zero, is superimposed on the current, that varies with time.

4. The method according to one of the preceding claims,
wherein
the variation of the current over time is performed at a frequency of 10 Hz or more.

5. Electrothermal gas actuator for gas activation of defined volumes with defined amounts of energy using aeromaterials, comprising:
- an electrical power source,
- a control device configured to control the power source according to a method of the preceding claims,
- a shaped body made of an electrically conductive aeromaterial, wherein the shaped body has open-pored sides with inlets for a gas and/or ambient air/gas into the pore space of the aeromaterial and is connected for electrical current flow, and wherein the electrically conductive aeromaterial is an aerocarbon, and wherein
the volume of the pore space of the shaped body has a value within the range of 1 nanoliter to 1 liter.

6. Use of a gas actuator according to claim 5 as the pumping mechanism of a micro-dosing pump for gases.

7. Use of a gas actuator according to claim 5 for destroying organic structures and microorganisms entrained in ambient air.

8. Use of a gas actuator according to claim 5 as an emitter of audible sound or as a loudspeaker.

## Revendications

1. Procédé d'activation d'un gaz, dans lequel
- un aéromatériau électriquement conducteur sous la forme d'un aérocarbonne comportant un espace poreux contenant le gaz est mis en contact électrique, et
- au moins un courant électrique, qui varie dans le temps, traverse l'aéromatériau,
dans lequel
- le aéromatériau exhale du gaz de l'espace poreux lorsque la consommation électrique augmente et
- lorsque la consommation électrique est réduite, le gaz provenant de l'environnement de l'aéromatériau est inhalé,
**caractérisé en ce que**
- un courant pulsé variant dans le temps, présentant des niveaux de puissance d'impulsion, des durées d'impulsion et des intervalles d'impulsion prédéterminés est injecté à travers l'aéromatériau, dans lequel
- les niveaux de puissance d'impulsion prédéterminées se situent dans une plage allant de quelques watts à plus de 100 watts, ce qui la température de l'aéromatériau est modifiée de 100 °C ou plus en une seconde ou moins,
et
- les intervalles entre les impulsions sont réglés pour être d'au moins d'un ordre de grandeur supérieurs aux durées des impulsions.

2. Procédé selon la revendication 1,
**caractérisé en ce que**
une activation guidée du gaz est réalisée en disposant l'aéromatériau sous la forme d'un corps moulé dans un boîtier muni d'une entrée et d'une sortie de gaz ainsi que de clapets anti-retour.

3. Procédé selon l'une quelconque des revendications précédentes,
**caractérisé en ce que**
un courant, constant dans le temps et différent de zéro, est superposé au courant qui varie dans le temps.

4. Procédé selon l'une des revendications précédentes,
**caractérisé en ce que**
la variation du courant dans le temps s'effectue à une fréquence de 10 Hz ou plus.

5. Actionneur électrothermique à gaz pour l'activation gazeuse de volumes définis avec des quantités d'énergie définies à l'aide des aéromatériaux, comprenant :
- une source de courant électrique,
- un dispositif de commande configuré pour commander la source de courant selon un procédé selon l'une des revendications précédentes,
- un corps moulé constitué d'un aéromatériau électriquement conducteur, dans le corps moulé présente des faces à pores ouverts avec des accès pour un gaz et/ou le gaz ambiant vers l'espace poreux de l'aéromatériau et étant en contact pour la circulation du courant électrique, et dans lequel l'aéromatériau électriquement conducteur est un aérocarbone, et dans laquelle
le volume de l'espace poreux du corps moulé a une valeur comprise entre 1 nanolitre à 1 litre.

6. Utilisation d'un actionneur à gaz selon la revendication 5 en tant que mécanisme de pompage d'une pompe de microdosage pour gaz.

7. Utilisation d'un actionneur à gaz selon la revendication 5 pour détruire des structures organiques et des micro-organismes entraînés dans l'air ambiant.

8. Utilisation d'un actionneur à gaz selon la revendication 5 en tant qu'émetteur de sons audibles ou en tant que haut-parleur.
